# EUROPÄISCHE PATENTANMELDUNG

(11) **EP 4 692 606 A1**
(43) Veröffentlichungstag der Anmeldung: **11.02.2026**
(21) Anmeldenummer: 25179002.8
(22) Anmeldetag: 27.05.2025
(51) Int. Cl.: F16K 1/22

(54) **ABSPERRKLAPPE**

(30) Priorität: 07.08.2024 DE 102024122577
(71) Anmelder: VAG GmbH, 68305 Mannheim (DE)
(72) Erfinder: Herold, Heribert Erich, 68259 Mannheim (DE); Farbacher, Sebastian, 67472 Esthal (DE)
(74) Vertreter: Charrier Rapp & Liebau

(57) **Zusammenfassung**

Die Erfindung betrifft eine Absperrklappe (1) mit einem innerhalb eines Gehäuses (3) um eine Drehachse (5) schwenkbar gelagerten klappenförmigen Absperrorgan (4), das eine gegenüber der Drehachse (4) versetzte Absperrscheibe (12), seitliche Naben (13, 14) zur drehbaren Lagerung des klappenförmigen Absperrorgans (4) innerhalb des Gehäuses (3) und einen von der Absperrscheibe (12) beabstandeten und mit dieser über äußere Stützrippen (18) im Bereich der Naben (13, 14) verbundenen Tragkörper (17) enthält. Erfindungsgemäß sind in den beiden äußeren Stützrippen (18) auf beiden Seiten der Naben (13, 14) erste und zweite, von der Außenseite der äußeren Stützrippen (18) zu deren Innenseite verlaufende Durchlässe (23, 24) ausgebildet, die durch jeweils mindestens einen Verbindungskanal (27) innerhalb der beiden äußeren Stützrippen (18) miteinander verbunden sind.

## Beschreibung

Die Erfindung betrifft eine Absperrklappe nach dem Oberbegriff des Anspruchs 1.

Absperrklappen sind weit verbreitete Absperrorgane in der Wasserwirtschaft. Gegenüber Absperrschiebern sind Klappen sehr kompakt und benötigen speziell in Nennweiten größer DN 300 wesentlich weniger Einbauraum. Deshalb werden Rohrleitungssysteme mit Nennweiten ab ca. DN 300 meist mit Absperrklappen ausgerüstet. Der Nachteil von Absperrklappen besteht darin, dass sich die Klappenscheibe direkt in der Strömung befindet. Da die Klappenscheibe in der geschlossenen Stellung dem Anlagendifferenzdruck standhalten muss, müssen die Klappenscheiben speziell bei hohen Differenzdrücken entsprechend stabil ausgeführt sein. Je kräftiger jedoch die Klappenscheibe dimensioniert ist, desto mehr Durchflusswiderstand setzt sie dem Medium entgegen. Außerdem wirken die Klappenscheiben in einer Absperrklappe wie eine Tragfläche in der Strömung. Wird die Absperrklappe von der Offenstellung in die geschlossene Stellung bewegt, wirken hydraulische Kräfte an der Klappenscheibe. Je nach Öffnungsgrad und Anstellwinkel wird in Abhängigkeit von der Strömungsgeschwindigkeit ein öffnendes oder schließendes Drehmoment erzeugt.

Um eine steife und gleichzeitig strömungsgünstige Konstruktion zu erreichen, werden besonders bei großen Nennweiten und bei hohen Druckstufen sogenannte Doppeldecker-Klappenscheiben eingesetzt. Eine Absperrklappe mit einer derartigen Klappenscheibe ist aus der DE 10 2014 107 446 B1 bekannt. Bei dieser bekannten Absperrklappe weist die Klappenscheibe eine gegenüber der Drehachse versetzte Absperrscheibe, seitliche Naben zur drehbaren Lagerung der Klappenscheibe innerhalb des Gehäuses und einen von der Absperrscheibe beabstandeten und mit dieser über Stützrippen verbundenen Tragkörper auf. Auf der Abströmseite der beiden gegenüberliegenden Naben sind von der Innenseite der Klappenscheibe durch die Naben hindurch zur Außenseite der Klappenscheibe verlaufende Bohrungen oder Schlitze vorgesehen. Dadurch kann ein Teil des in einer Öffnungsstellung der Klappenscheibe zwischen der Absperrklappe und dem Tragkörper strömenden Fluids zur Klappenaußenseite geführt und somit eine Unterdruck- und Wirbelbildung an der Abströmseite der Absperrklappe verringert werden. Außerdem können dadurch auch die Betätigungsmomente zum Öffnen und Schließen des Absperrorgans reduziert und die Gefahr von Schwingungen des Absperrorgans und der nachfolgenden Rohrleitung vermindert werden.

Aufgabe der Erfindung ist es, eine Absperrklappe der genannten Art zu schaffen, die eine signifikante Verringerung des Strömungswiderstands und eine Reduzierung der abströmseitigen Verwirbelungen ermöglicht.

Diese Aufgabe wird durch eine Absperrklappe mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Absperrklappe sind in den im Bereich der Naben angeordneten äußeren Stützrippen auf beiden Seiten der gegenüberliegenden Naben erste und zweite, von der Außenseite der äußeren Stützrippen zu deren Innenseite verlaufende Durchlässe ausgebildet, die durch jeweils mindestens einen Verbindungskanal innerhalb der beiden äußeren Stützrippen miteinander verbunden sind. Durch die Durchlässe in den äußeren Stützrippen kann ein Druckausgleich zwischen der Mitte des klappenförmigen Absperrorgans und dem Totwassergebiet hinter den Naben erreicht und somit eine Unterdruck- und Wirbelbildung an der Abströmseite des Absperrorgans verringert werden. Die Durchlässe können parallel oder unter einem Winkel zur Drehachse des Absperrorgans ausgerichtet und damit quer bzw. winklig zur Hauptströmungsrichtung angeordnet sein. Die ersten und zweiten Durchlässe können zweckmäßigerweise in Form von runden Öffnungen oder Schlitzen ausgeführt sein. Sie können gleiche oder unterschiedliche Formen aufweisen und gleich oder unterschiedlich ausgerichtet sein. Durch den innerhalb der Stützrippe angeordneten Verbindungskanal zwischen den stromaufwärts und stromabwärts der Nabe angeordneten Durchlässen kann ein durch die Absperrklappe bei geöffnetem Absperrorgan an der Außenseite der äußeren Stützrippen strömendes Medium von dem ersten Durchlass über den Verbindungskanal innerhalb der äußeren Stützrippe zu dem zweiten Durchlass gelangen. Dadurch kann ein Druckausgleich mit einer geringeren Beeinflussung der durch den Mittelteil des Absperrorgans einströmenden Mediums erreicht werden. Die geringe Umlenkung der Strömung erleichtert den Austritt in den Unterdruckbereich nach den Naben. Außerdem kann die Nivellierung der Druckzonen vor und nach dem Absperrorgan zur Verringerung der Kavitation beitragen.

In einer zweckmäßigen Ausführung können die Verbindungskanäle zwischen den Naben und einer inneren Fläche der äußeren Stützrippen verlaufen.

Die Verbindungskanäle können zur Innenseite der Stützrippen geschlossen oder durch mindestens einen Durchgang zur Innenseite der Stützrippen hin geöffnet sein.

In einer für die Strömungsführung günstigen Ausführung weisen die äußeren Stützrippen eine zur Innenseite des klappenförmigen Absperrorgans hin gewölbte Kontur auf.

Die an der Außenseite der äußeren Stützrippen angeordneten Naben haben vorzugsweise eine blockförmige Grundform mit geraden Seitenflächen und abgerundeten oberen Flächen. Durch die blockförmige Grundform der beiden Naben ergibt sich die Möglichkeit, die ersten und zweiten Kanäle oder Durchlässe vergleichsweise kurz und in einem flachen Winkel verlaufend auszugestalten. Außerdem kann dadurch die Nabe kleiner und gewichtsoptimiert gestaltet werden, wodurch auch eine für den Gießvorgang nachteilige Materialanhäufung vermieden werden kann.

Zwischen den äußeren Stützrippen können beabstandete innere Stützrippen angeordnet sein. Durch die zwischen den äußeren und inneren Stützrippen gebildeten Durchgänge kann das durch die Durchgangsöffnung des Gehäuses bei geöffneter Stellung des klappenförmigen Absperrorgans geleitete Medium strömen. In den inneren Stützrippen können einer oder mehrere Durchbrüche vorgesehen sein. Auch in dem Tragkörper können Durchgangsöffnungen angeordnet sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine Absperrklappe in einer Perspektive;
- **Figur 2**: ein klappenförmiges Absperrorgan der in Figur 1 gezeigten Absperrklappe in einer ersten perspektivischen Ansicht;
- **Figur 3**: das in Figur 2 gezeigte klappenförmige Absperrorgan in einer zweiten perspektivischen Ansicht;
- **Figur 4**: eine zum Teil geschnittene Draufsicht des in den Figuren 2 und 3 gezeigten klappenförmigen Absperrorgans;
- **Figur 5**: eine vergrößerte Detailansicht von der Innenseite einer äußeren Stützrippe des in den Figuren 2 und 3 gezeigten klappenförmigen Absperrorgans und
- **Figur 6**: eine vergrößerte Detailansicht von der Außenseite einer äußeren Stützrippe des in den Figuren 2 und 3 gezeigten klappenförmigen Absperrorgans.

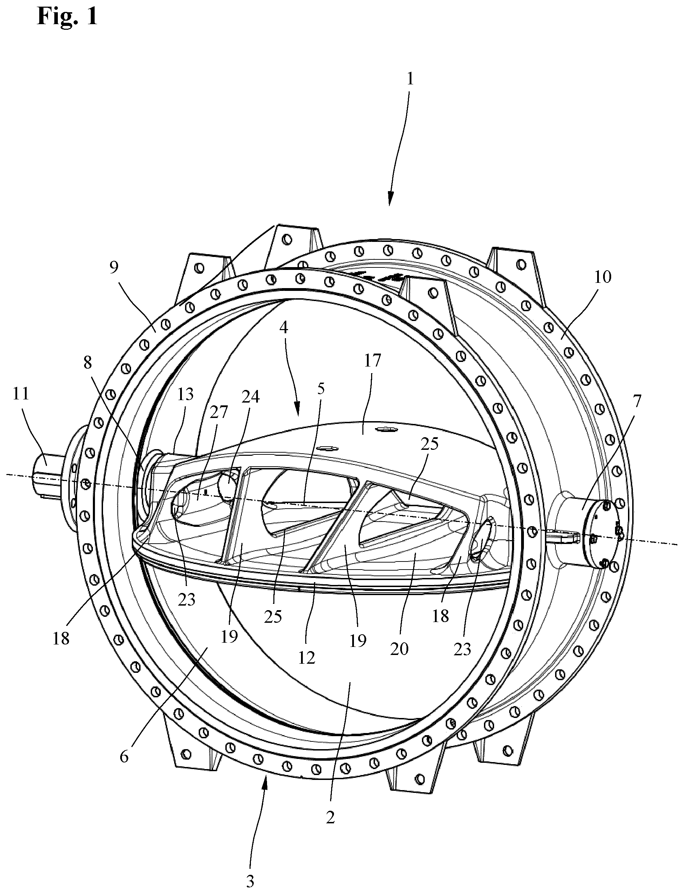

Die in Figur 1 schematisch dargestellte Absperrklappe 1 ist für die Absperrung von Wasserleitungen in der Wasserwirtschaft konzipiert. Sie enthält ein mit einer runden Durchgangsöffnung 2 versehenes Gehäuse 3 und ein klappenförmiges Absperrorgan 4, das in dem Gehäuse 3 um eine senkrecht zur Mittelachse der Durchgangsöffnung 1 verlaufende Drehachse 5 schwenkbar gelagert ist. Das Gehäuse 3 weist in der gezeigten Ausführung einen ringförmigen Grundkörper 6 mit rechten und linken Lagerbuchsen 7 und 8 sowie einem vorderen und hinteren Anschlussflansch 9 bzw. 10 zum Anschluss einer Rohrleitung auf. Das klappenförmige Absperrorgan 4 ist in den Lagerbuchsen 7 und 8 schwenkbar gelagert und kann durch einen Antriebszapfen 11 zwischen einer in Figur 1 gezeigten vollständig geöffneten Stellung und einer um 90° geschwenkten Schließstellung bewegt werden.

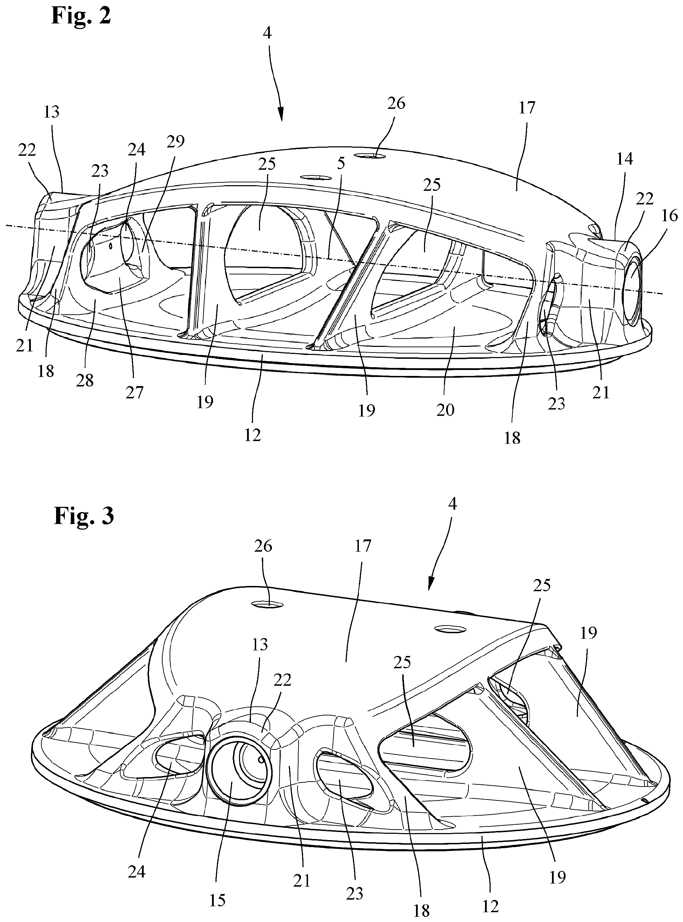

Wie besonders aus den Figuren 2 und 3 hervorgeht, ist das klappenförmige Absperrorgan 4 in exzentrischer Bauweise mit einer gegenüber der Drehachse 5 versetzten Absperrscheibe 12 und seitlichen ersten und zweiten Naben 13 bzw. 14 mit gegenüber der Absperrscheibe 12 versetzten ersten und zweiten Öffnungen 15 und 16 zur Aufnahme von Lager- bzw. Antriebszapfen ausgeführt. Durch die exzentrische Bauweise kann das Dichtsystem in der Offenstellung entlastet werden. In der gezeigten Ausführung ist die Klappenscheibe 4 als sogenannte Doppeldecker-Klappenscheibe mit einem von der Absperrscheibe 12 beabstandeten plattenförmigen Tragkörper 17 ausgeführt.

Die Absperrscheibe 12 und der plattenförmige, leicht nach außen gewölbte Tragkörper 17 sind über äußere Stützrippen 18 im Bereich der seitlichen Naben 13 und 14 und dazwischen angeordnete innere Stützrippen 19 miteinander verbunden. Über die Stützrippen 18 und 19 ist die Absperrscheibe 12 an dem Tragkörper 17 abgestützt. Dadurch wird eine steife aber gleichzeitig strömungsgünstige Konstruktion ermöglicht, die insbesondere bei großen Nennweiten und hohen Druckstufen von Vorteil ist. Bei der gezeigten Ausführung sind zwischen den beiden im Bereich der Naben 13 und 14 angeordneten äußeren Stützrippen 18 zwei von diesen und auch voneinander beabstandete innere Stützrippen 19 vorgesehen. Zwischen den Stützrippen 18 und 19 werden Durchgänge 20 gebildet, durch welche das durch die Durchgangsöffnung 2 des Gehäuses 3 bei geöffneter Stellung des klappenförmigen Absperrorgans 4 geleitete Medium strömen kann.

In den Figuren 2 und 3 ist erkennbar, dass die an der Außenseite der äußeren Stützrippen 18 angeordneten Naben 13 und 14 eine blockförmige Grundform mit geraden Seitenflächen 21 und abgerundeten oberen Flächen 22 aufweisen. In den beiden äußeren Stützrippen 18 sind neben den beiden Naben 13 und 14 durch die Stützrippen 18 von deren Außenseite zu deren Innenseite verlaufende erste und zweite Kanäle oder Durchlässe 23 bzw. 24 angeordnet. Durch die blockförmige Grundform der beiden Naben 13 und 14 ergibt sich die Möglichkeit, die ersten und zweiten Kanäle oder Durchlässe 23 bzw. 24 vergleichsweise kurz und in einem flachen Winkel verlaufend auszugestalten. Die äußeren Stützrippen 18 weisen in einer strömungsgünstigen Ausführung eine zur Innenseite des klappenförmigen Absperrorgans 4 hin gewölbte Kontur auf. In den inneren Stützrippen 19 sind bei der gezeigten Ausführung Durchbrüche 25 vorgesehen. Auch in dem Tragkörper 17 sind Durchgangsöffnungen 26 vorhanden.

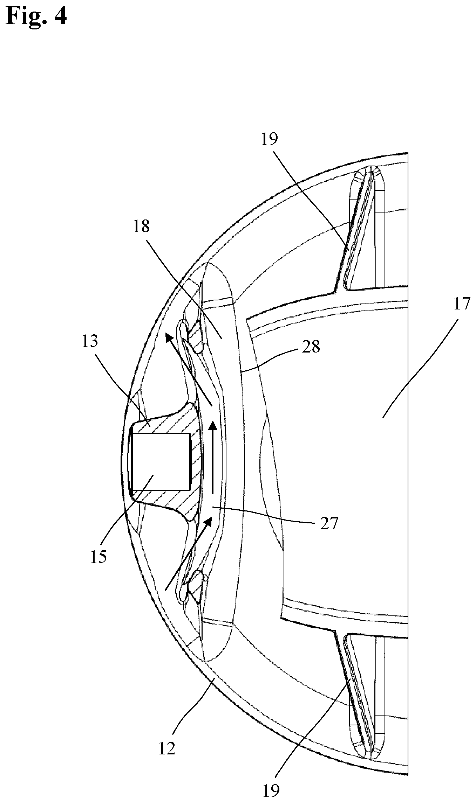

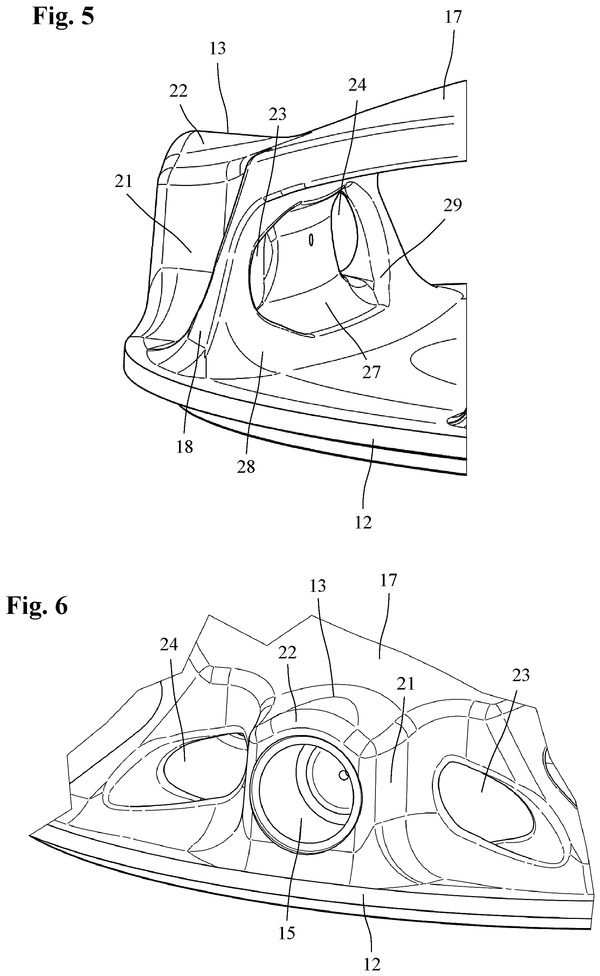

Aus den Figuren 4 und 5 geht hervor, dass die beiden stromaufwärts und stromabwärts der Naben 13 und 14 angeordneten Durchlässe 23 und 24 in den beiden äußeren Stützrippen 18 durch jeweils einen Verbindungskanal 27 innerhalb der beiden äußeren Stützrippen 18 miteinander verbunden sind. In der gezeigten Ausführung verlaufen die beiden Verbindungskanäle 27 zwischen den Naben 13 bzw. 14 und einer inneren Fläche 28 der jeweiligen inneren Stützrippe 18 im Wesentlichen rechtwinklig zur Drehachse 5. Die Verbindungskanäle 27 können zur Innenseite der Stützrippen 18 geschlossen oder durch einen in den Figuren 2 und 5 erkennbaren Durchgang 29 zur Innenseite der Stützrippen 18 hin geöffnet sein. In Figur 4 ist erkennbar, dass ein durch die Absperrklappe 1 bei geöffnetem Absperrorgan 4 an der Außenseite der äußeren Stützrippen 18 strömendes Medium von dem ersten Durchlass 23 über den Verbindungskanal 27 innerhalb der äußeren Stützrippe 18 entlang der gezeigten Pfeile zu dem zweiten Durchlass 24 gelangen kann. Dadurch kann ein Druckausgleich mit einer geringeren Beeinflussung der durch den Mittelteil des Klappenorgans 4 einströmenden Mediums erreicht werden. Die geringe Umlenkung der Strömung erleichtert den Austritt in den Unterdruckbereich nach den Naben 13 und 14.

### Bezugszeichenliste

- 1: Absperrklappe
- 2: Durchgangsöffnung
- 3: Gehäuse
- 4: Absperrorgan
- 5: Drehachse
- 6: Grundkörper
- 7: Rechte Lagerbuchse
- 8: Linke Lagerbuchse
- 9: Vorderer Anschlussflansch
- 10: Hinterer Anschlussflansch
- 11: Antriebszapfen
- 12: Absperrscheibe
- 13: Erste Nabe
- 14: Zweite Nabe
- 15: Erste Öffnung
- 16: Zweite Öffnung
- 17: Tragkörper
- 18: Äußere Stützrippe
- 19: Innere Stützrippe
- 20: Durchgang
- 21: Seitenfläche
- 22: Obere Fläche
- 23: Erster Durchlass
- 24: Zweiter Durchlass
- 25: Durchbruch
- 26: Durchgangsöffnung
- 27: Verbindungskanal
- 28: Innere Fläche
- 29: Durchgang

## Patentansprüche

1. Absperrklappe (1) mit einem innerhalb eines Gehäuses (3) um eine Drehachse (5) schwenkbar gelagerten klappenförmigen Absperrorgan (4), das eine gegenüber der Drehachse (4) versetzte Absperrscheibe (12), seitliche Naben (13, 14) zur drehbaren Lagerung des klappenförmigen Absperrorgans (4) innerhalb des Gehäuses (3) und einen von der Absperrscheibe (12) beabstandeten und mit dieser über äußere Stützrippen (18) im Bereich der Naben (13, 14) verbundenen Tragkörper (17) enthält, **dadurch gekennzeichnet, dass** in den beiden äußeren Stützrippen (18) auf beiden Seiten der Naben (13, 14) erste und zweite, von der Außenseite der äußeren Stützrippen (18) zu deren Innenseite verlaufende Durchlässe (23, 24) ausgebildet sind, die durch jeweils mindestens einen Verbindungskanal (27) innerhalb der beiden äußeren Stützrippen (18) miteinander verbunden sind.

2. Absperrklappe (1) nach Anspruch 1, **dadurch gekennzeichnet, dass** die Verbindungskanäle (27) zwischen den Naben (13, 14) und einer inneren Fläche (28) der äußeren Stützrippen (18) verlaufen.

3. Absperrklappe (1) nach Anspruch 1 oder 2, **dadurch gekennzeichnet, dass** die Verbindungskanäle (27) zur Innenseite der jeweiligen Stützrippen (18) geschlossen oder durch mindestens einen Durchgang (29) zur Innenseite der Stützrippen (18) hin geöffnet sind.

4. Absperrklappe (1) nach einem der Ansprüche 1 bis 3, **dadurch gekennzeichnet, dass** die äußeren Stützrippen (18) eine zur Innenseite des klappenförmigen Absperrorgans (4) hin gewölbte Kontur aufweisen.

5. Absperrklappe (1) nach einem der Ansprüche 1 bis 4, **dadurch gekennzeichnet, dass** die an der Außenseite der äußeren Stützrippen (18) angeordneten Naben (13, 14) eine blockförmige Grundform mit geraden Seitenflächen (21) und abgerundeten oberen Flächen (22) aufweisen.

6. Absperrklappe (1) nach einem der Ansprüche 1 bis 5, **dadurch gekennzeichnet, dass** zwischen den äußeren Stützrippen (18) beabstandete innere Stützrippen (19) angeordnet sind.

7. Absperrklappe (1) nach Anspruch 6, **dadurch gekennzeichnet, dass** in den inneren Stützrippen (19) einer oder mehrere Durchbrüche (25) angeordnet sind.

8. Absperrklappe (1) nach einem der Ansprüche 1 bis 7, **dadurch gekennzeichnet, dass** in dem Tragkörper (17) Durchgangsöffnungen (26) angeordnet sind.

9. Absperrklappe (1) nach einem der Ansprüche 1 bis 8, **dadurch gekennzeichnet, dass** die Durchlässe (23, 24) in Form von Löchern oder in Form von Schlitzen ausgebildet sind.

10. Absperrklappe (1) nach einem der Ansprüche 1 bis 9, **dadurch gekennzeichnet, dass** die Durchlässe (23, 24) parallel oder unter einem anderen Winkel zur Drehachse (5) des Absperrorgans (4) verlaufen.

11. Absperrklappe (1) nach einem der Ansprüche 1 bis 10, **dadurch gekennzeichnet, dass** die Verbindungskanäle (27) rechtwinklig zur Drehachse (5) des Absperrorgans (4) verlaufen.
